# EUROPEAN PATENT SPECIFICATION

(11) **EP 2 659 162 B1**
(45) Date of publication and mention of the grant of the patent: **26.06.2019**
(21) Application number: 11805658.9
(22) Date of filing: 28.12.2011
(51) Int. Cl.: F16G 5/16

(54) **A DRIVE BELT FOR A CONTINUOUSLY VARIABLE TRANSMISSION**
ANTRIEBSRIEMEN FÜR EIN STUFENLOSES GETRIEBE
COURROIE D'ENTRAÎNEMENT POUR TRANSMISSION À VARIATION CONTINUE

(30) Priority: 29.12.2010 NL 1038483
(43) Date of publication of application: 06.11.2013
(73) Proprietor: Robert Bosch GmbH, 70442 Stuttgart (DE)
(72) Inventor: HUPKES, Ingmarus Geert, NL-5000 AM Tilburg (NL); TRAN, Duc-Minh, NL-5348 KX Oss (NL)
(74) Representative: Plevier, Gabriël Anton Johan Maria
(86) International application number: PCT/NL2011/000086
(87) International publication number: WO 2012/091547

(56) References cited:
- EP-A1- 1 111 271
- EP-A1- 1 544 502
- JP-A- 3 229 038
- JP-A- 61 127 944
- US-A- 4 533 342

## Description

The invention relates to a drive belt for use with a continuously variable transmission having two variable pulleys, each pulley defining a circumferential V-groove. The drive belt is provided with an endless carrier that typically consists of two band sets, each band set comprising at least one, but usually a number of concentrically nested, relatively thin and flat endless metal bands and with a number of metal transverse elements arranged on and in sliding relationship with the band sets. Each transverse element is provided with one or more recesses or cut-outs, each cut-out accommodating a respective band set in such a manner that a first part of the transverse element extends radially inward or below the band set, a third part of the transverse element extends radially outward or above the band set and a second part of the transverse element is located in-between the said first and second parts thereof, linking these latter two parts together. A drive belt of this type is known from the European patent publication No. 0 014 013 A1.

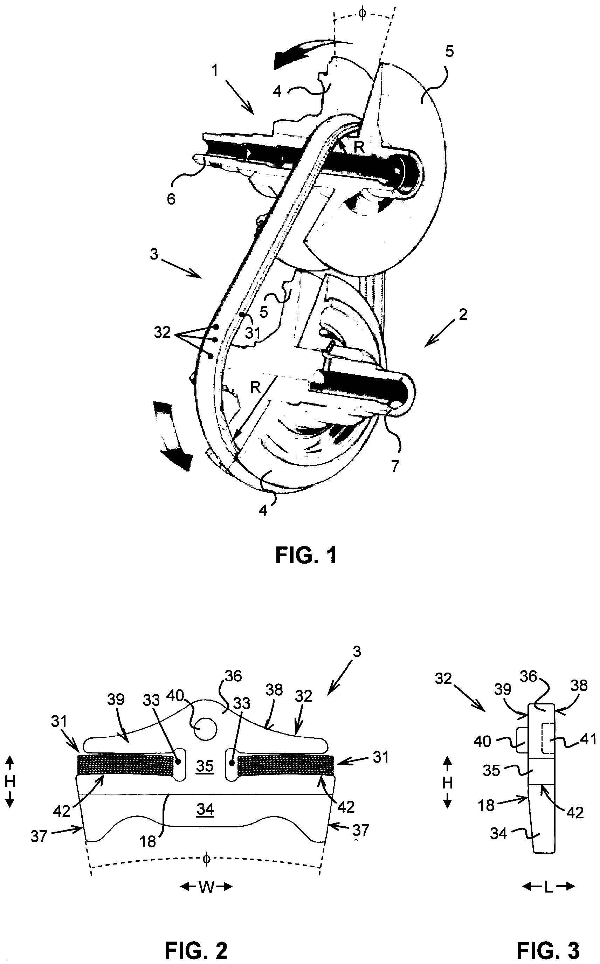

When describing the directions with respect to the transverse element, it is always assumed that the transverse element is in an upright position, such as is illustrated in figure 2 in a front view thereof. In this figure, the circumference or length direction of the drive belt is at right angles to the plane of the figure. The trans¬verse or width direction is from left to right and the radial or height direction is from top to bottom in the plane of figure 2.

Further known designs of the drive belt are provided by JP 3 229038 A, US 4 533 342 A, JP 61 127944 A, EP 1 111 271 A1 and EP 1 544 501 A1. According to JP 3 229038 A a boundary surface of the cut-out defined by the said first part of the transverse element is convexly curved and a boundary surface of the cut-out defined by the said third part of the transverse element is concavely curved. Furthermore, the endless carrier is curved in transverse direction as well. According to JP 3 229038 A, upon rotation of the transverse element relative to the endless carrier, it arrives into a surface contact with the latter via the concavely curved boundary surface defined by its third part.

According to US 4 533 342 A the boundary surface of the cut-out defined by the said first part of the transverse element is defined such that the height of the cut-out decreases in a direction away from the second part of the transverse element towards a respective lateral side thereof. As a result, upon rotation of the transverse element relative to the endless carrier, it arrives into contact with the latter at the lateral edge of the third part thereof.

According to JP 61 127944 A the boundary surface of the cut-out defined by the said third part of the transverse element is concavely curved. Furthermore, the endless carrier is curved in transverse direction as well. According to JP 61 127944 A, upon rotation of the transverse element rotates relative to the endless carrier, it arrives into a surface contact with the latter via the concavely curved boundary surface defined by its third part.

According to EP 1 111 271 A1 the boundary surface of the cut-out defined by the said first part of the transverse element is convexly curved. Furthermore, the endless carrier is curved in transverse direction as well. According to EP 1 111 271 A1 the convex curvature of the endless carrier is retained as the endless carrier is bend and stretched in its circumference direction during operation, in order to reduce a contact stress imposed on the endless carrier by the contact with the said first part of the transverse element.

According to EP 1 544 502 A1 the boundary surface of the cut-out defined by the said first part of the transverse element is convexly curved. Furthermore, the endless carrier is curved in transverse direction as well. According to EP 1544 502 A1 the convex curvature of the boundary surface of the cut-out defined by the said first part is maximised, in order to reduce a contact stress imposed on the endless carrier by the contact with the said first part of the transverse element.

It is well-known in the art that the metal bands of the band sets are repeatedly and variably bent and tensioned to such an extent that a band set is ultimately prone to fatigue fracture. Such fatigue fracture typically initiates at a weak spot on the radial inside surface of the radially innermost band of the band set, since such surface is additionally subjected to stresses due to its contact with the transverse elements. These insights are, for instance, described in the European patent publication No. 1 273 824 A1 that proposes to reduce the bending stress at the radial inside surface of the radially innermost band to compensate for the above-mentioned contact stress whereto this surface is subjected. Indeed, several other solutions have been proposed in the art for achieving this effect.

It has, however, been observed in practice that, if the design of the band set, i.e. of the radially innermost band thereof, is modified in accordance with the known art to improve the fatigue strength thereof, the fatigue fracture initiation may switch to the radial outside surface of the radially outermost band of the band set. Moreover, in some examples, the fatigue strength of the band set as a whole was hardly improved thereby. For this situation EP 1 273 824 A1 further proposes to reduce the bending stress at the radial outside surface of the radially outermost band of the band set, to also improve the fatigue strength of the radially outermost band and hence of the band set as a whole. However, a disadvantage of this latter known solution for improving the fatigue strength of the band set as a whole, is that the radially outermost band thereof is required to be processed differently from other bands of the band set. Naturally, this disadvantageously adds to the complexity and cost of the drive belt manufacturing process.

It is an object of the present invention to improve the fatigue strength of in particular the radially outermost band of the band set and, preferably, to improve the service life of the drive belt as a consequence. In particular, such object should preferably be realized without adding to the manufacturing cost and/or complexity of the drive belt as a whole.

According to the invention the above object may be realized by designing the transverse element, in particular the head part thereof, such that, upon movement of the transverse element relative to the band sets, a physical contact between such head part and the radial outside surface of the radially outermost band of the band sets occurs beyond the width-wise middle or centerline of the band set towards its lateral side that faces away from the neck part of the transverse element.

The present invention relies on the observation that a fatigue fracture of the radially outermost band of the band set in practice tends to initiate at, or at close to the middle of such band in width or transverse direction. Indeed, especially when taking the slightly crowned cross-sectional shape and the internal stresses of the band into account, a theoretical analysis of stresses therein due to the said bending thereof, confirms that the highest stresses occur at the transverse sides of the radial inside surface of the band when it is stretched (i.e. is "bent" straight) and in the middle of the radial outside surface of the band when it is bent convexly.

From the above practical observation and theoretical analysis the insight was derived that in the drive belt a contact between the said third or head part of the transverse element and the radially outermost band of the band set should preferably not occur in the middle of such band where the bending stress is highest. Moreover, such contact should preferably also not be located close to the second part of the transverse element, because of the instability and/or loss of integrity of the drive belt that could result there from. Such contact occurs for example when the transverse element translates radially inward relative to the band set or when the transverse element rotates about the length direction of the drive belt relative to the band set.

Thus, according to the invention, a contact between the third part of the transverse element and the band set should, as seen from the second part thereof, preferably take place substantially beyond the middle of the radially outermost band of the band set, e.g. at two thirds of the width thereof.

In order to illustrate the invention, an exemplary embodiment of a drive belt will be described with reference to the drawing, in which:
Fig. 1 schematically shows a continuously variable transmission with a drive belt running over two pulleys;
Fig. 2 shows a cross section of the drive belt viewed in the length direction thereof;
Fig. 3 shows a width-wise oriented view of a transverse element of the drive belt;
Fig. 4 shows a cross section of the drive belt viewed in the length direction thereof with the transverse element in a rotated position relative to a band set of the belt;
Fig. 5 schematically shows a cross-section of the transverse element according to the invention;
Fig. 6 schematically shows a detail of the transverse element according to the invention;

The schematic illustration of a continuously variable transmission in Fig. 1 shows a drive belt 3 which runs over two pulleys 1, 2 and which includes a closed band set 31 that carries an essentially contiguous row of transverse elements 32 that are arrange over the circumference of the band set 31. In the illustrated position, the upper pulley 1 rotates more quickly than the lower pulley 2. By changing the distance between the two parts, in this case conical discs 4, 5 from which each pulley 1, 2 is composed, the so-called running radius R of the drive belt 3 on the respective pulleys 1, 2 can be changed, as a result of which the speed difference between the two pulleys 1,2 can be varied as desired. This is a known manner of varying a difference in rotational speed between an input shaft 6 and an output shaft 7 of the transmission.

In Fig. 2, the drive belt 3 is shown in a cross section thereof facing in longitudinal direction. This figure shows the presence of two band sets 31 shown in cross-section that carry and guide the transverse elements 32 of the drive belt 3, whereof one transverse element 32 is shown in front elevation in Fig. 2. The transverse elements 32 and the band sets 31 of the drive belt 3 are typically made of metal, usually steel. The transverse elements 32 are able to move, i.e. slide along the length direction L of the band sets 31, so that when a force is transmitted between the transmission pulleys 1, 2, this force is transmitted by the transverse elements 32 pressing against one another and pushing each other forward in a direction of rotation of the drive belt 3 and the pulleys 1, 2.

The band sets 31 hold the drive belt 3 together and, in this particular exemplary embodiment, are composed of eight individual endless bands each, which endless bands are mutually concentrically nested to form the band set 31. In practice, the band sets 31 can comprise between six and twelve endless bands.

The transverse element 32, which is also shown in side view in Fig. 3, is provided with two cut-outs 33 located opposite one another and opening towards opposite transverse sides of the element 32. Each cut-out 33 accommodates a respective one of the two band sets 31. A first or base part 34 of the transverse element 32 thus extending radially inwards from or, in height direction H, below the cut-out (s) 33, a second or neck part 35 of the transverse element 32 being situated in-between and/or at the same (radial) height of the cut-out (s) 33 and a third or head part 36 of the transverse element 32 extending radially outwards or, in height direction H, above the cut-out(s) 33. The lower or radially inward side of a respective cut-out 33 is delimited by a so-called bearing surface 42 of the base part 34 of the transverse element 32, which bearing surface 42 faces radially outwards or upwards in the general direction of the head part 36. The bearing surfaces 42 are typically provided with a convex curvature in the width direction W and/or in the length direction L of the drive belt 3. The radii of curvature associated therewith are typically large in relation to the dimensions of the bearing surfaces 42 and, in reality, would not be discernable in/on the scale of Fig. 2 and 3.

The lateral sides or pulley contact surfaces 37 of the said base part 34 of the transverse element 32 are oriented at an angle φ with respect to one another, which corresponds, at least predominantly, to a V-angle φ defined between the conical discs 4,5 of the transmission pulleys 1, 2 (see Fig. 1).

A first or rear main face 38 of the transverse element 32 facing in the length direction L of the drive belt 3 is essentially flat, while a so-called rocking or tilting edge 18 is provided on an opposite facing, second or front main face 39 of the transverse element 32. In height direction H above the rocking edge 18, the transverse element 32 in side view has an essentially constant thickness and, in height direction H, whereas below the rocking edge 18, said base part 34 tapers towards the bottom side of the transverse element 32. The rocking edge 18 is typically provided in the form of a slightly rounded section of the front main face 39 of the transverse element 32. In the drive belt 3, the front main face 39 of the transverse element 32 arrives in contact with the rear main face 38 of an adjacent transverse element 32 at the location of the rocking edge 18, both in the straight parts of the drive belt 3 stretching between the pulleys 1, 2 and in the curved parts thereof located between the conical pulley discs 4, 5 of the transmission pulleys 1, 2.

The transverse element 32 is also provided with a protuberance 40 on its front main face 39 and a hole 41 in its rear main face 38. The protuberance 40 and the hole 41 of two adjacent transverse elements 32 in the drive belt 3 are mutually engaging in the sense that the protuberance 40 of a first of the adjacent transverse elements 32 is at least partly inserted in the hole 41 of a second one thereof. Hereby, a relative linear translation between and/or rotation of the said two adjacent transverse elements 32 is limited to a clearance provided between the said protuberance 40 and hole 41.

During operation of the transmission, the transverse elements 32 of the drive belt 3 can move relative to the band sets 31 not only along the circumference of the band sets 13, but can also translate in radially inward direction, rotate about the transverse direction and/or about the longitudinal direction in relation to such band sets 31. These latter relative movements of the transverse elements 32 being limited by the physical interaction thereof with one or both of the band sets 31. More in particular, such relative movements are only possible until both the base part 34 and the head part 36 of the transverse element 32 arrive in contact with the band sets 31 that are highly tensioned during operation, and hence to a large extent representing a rigid body.

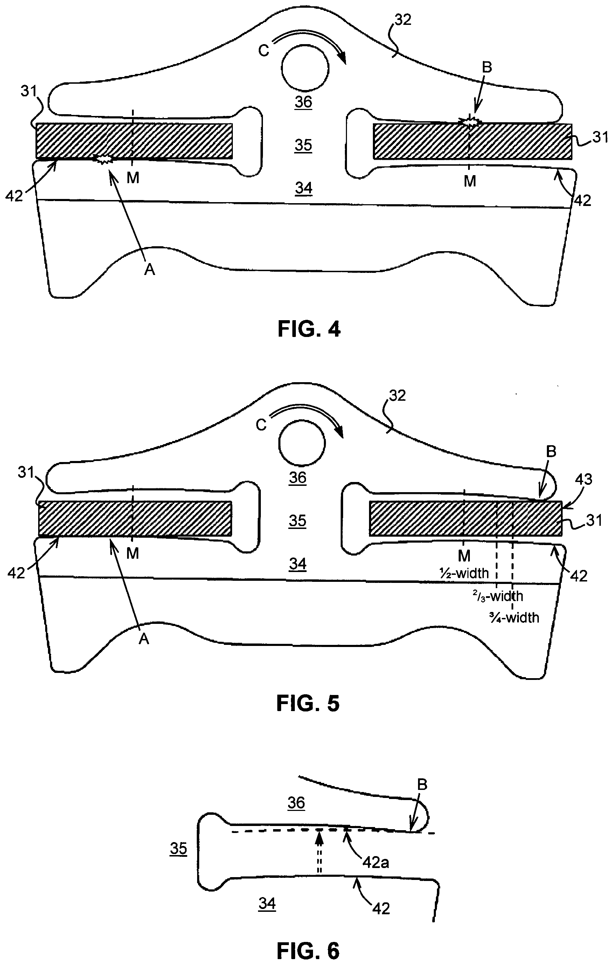

An example of such relative movements is shown in Fig. 4 by way of a rotation C of the transverse element 32 -in the shown example a clockwise rotation C about the longitudinal or length direction L of the drive belt 3-, however, with an exaggerated amount of clearance in the height direction H between the band sets 31 and the transverse element 32 for the sake of illustration. From Fig. 4 it appears that the rotation C of the transverse element 32 relative to the band sets 31 is indeed limited by its base part 34 contacting the left band set 31 at location A and by its head part 36 contacting the right band 31 at location B. According to the present invention at these contact locations A and B the band sets 31 are (additionally) stressed by the contact with the transverse elements 32.

Because of the convexly curved or crowned shape of the bearing surfaces 42 that is in any case more pronounced than a crowning of the band sets 31, the said contact location A between one of the band sets 31 and the base part 34 of the transverse element 32 is located at or at least in the vicinity of the middle in the width direction W of such one band set 31, i.e. favorably away from the highest bending stress occurring on the radial inside surface of the band sets 31 that is located at or near their the transverse sides. However, the said contact location B between the other one band set 31 and the head part 36 of the transverse element 32 is also located at or at least in the vicinity of the middle in the width direction W of such other one band set 31, i.e. more or less coinciding with the highest bending stress occurring on the radial outside surface of the band sets 31 that is located in their width-wise midpoint. As a consequence, the said contact between the head part 36 of the transverse element 32 and the said other one band set 31, introduced an additional stress in the band set 31 at the location B where it is already the most highly stressed due to bending. As a result, the radially outermost band of the band sets 31 may be subject to early failure by fatigue fracture, at least in comparison with the other bands in band sets 31. In this respect it is noted that ideally, i.e. for realizing the optimum service life of the drive belt 3, all bands of the band sets 31 would be equally loaded and/or stressed.

Thus, in accordance with the present invention, the transverse elements 32 are to be designed such that, on movement thereof relative to the bands sets 31, they arrive into contact through their respective head part 36 at a location B away from the width-wise midpoint M of the band sets 31. So as not to compromise the stability and/or integrity of the drive belt 3 as a whole, it is a further requirement that such contact location B should be beyond the said the width-wise midpoint M as seen from the width-wise middle of the transverse elements 32, i.e. beyond the said midpoint M as seen in a direction from the neck part 35 of the transverse elements 32 towards the respective band set 31. A thus designed transverse element 32 is shown in Fig. 5.

Further, to quantify the invention, it is considered that the said contact location B lies beyond two thirds of the overall width of the band set 31, preferably within one quarter of such overall width when measured from its lateral outer side face 43.

Taking into account the crowned shape of the bearing surface 42, the functional requirement of the present invention requires structurally that the head part 36 of the transverse element 32 is designed not to extend downwards, i.e. towards the base part 34, to beyond an imaginary concavely curved arc 42a that is shaped correspondingly to the (convex curvature of the) bearing surface 42 and that touches the head part 36 at the location B of (intended) contact between the head part 36 of the transverse element 32 and a respective band set 31. This structural requirement is graphically illustrated in Fig. 6 that shows a detail of the transverse element 32 in accordance with the present invention.

## Claims

1. Drive belt (3) provided with an endless carrier (31) and with a number of transverse elements (32) that are slideably provided on the carrier (31), which carrier (31) includes at least one, predominantly ribbon-shaped metal band and which transverse elements (32) are each provided with two main faces (38, 39), where between the transverse element (32) extends in thickness direction, with at least one recess (33), wherein the carrier (31) is located, with a first or base part (34) that is located below the recess (33), a second or neck part (35) at the height of the recess (33) and with a third or head part (36) that is located above the recess (33), in which drive belt (3) both the endless carrier (31) and a bearing surface (42) of the base part (34) of the transverse element (32) that supports the carrier (31) at the location of the recess (33) are curved in the transverse direction of the drive belt (3), with the bearing surface (42) being curved more than the carrier (31) and in which drive belt (3) a bottom surface of the head part (36) of the transverse element (32), which bottom surface is located on the opposite side of the recess (33) relative to the bearing surface (42), is concavely curved in transverse direction, **characterized in that**, a radius of concave curvature of the bottom surface of the head part (36) is smaller than a radius of convex curvature of the bearing surface (42) of the base part (34), whereby the head part (36) of the transverse elements (32) does not arrive in contact with the carrier (31) in the middle thereof, but only beyond two thirds of a total width of the endless carrier (31) as seen in the direction away from the neck part (35) of the transverse element (32), at least at a radial inward translation or at a rotation about the virtual axis in the long and/or the transverse axis of the drive belt (3) of the transverse element (32) relative to the carrier (31).

2. Drive belt (3) according to claim 1, **characterized in that**, the contact as defined therein occurs at or beyond three quarters of a total width of the carrier (31), as seen in the direction away from the neck part (35) of the transverse element (32).

3. Drive belt (3) according to claim 1 or 2, **characterized in that**, the bottom surface of the head part (36) of the transverse element (32) touches but does not intersect a virtual line (42a) that is shaped correspondingly to the convex contour of the bearing surface (42) and touches the said virtual line (42a) only once.

## Patentansprüche

1. Antriebsriemen (3), versehen mit einem endlosen Träger (31) und mit einer Anzahl von Querelementen (32), die verschiebbar auf dem Träger (31) angeordnet sind, wobei der Träger (31) mindestens ein vorwiegend bandförmiges Metallband beinhaltet und wobei die Querelemente (32) jeweils versehen sind mit zwei Hauptflächen (38, 39), zwischen denen sich das Querelement (32) in Dickenrichtung erstreckt, mit mindestens einer Vertiefung (33), worin sich der Träger (31) befindet, mit einem ersten oder Basisteil (34), das unter der Vertiefung (33) positioniert ist, einem zweiten oder Halsteil (35) in der Höhe der Vertiefung (33), und mit einem dritten oder Kopfteil (36), das über der Vertiefung (33) positioniert ist, wobei in dem Antriebsriemen (3) sowohl der endlose Träger (31) als auch eine Lagerfläche (42) des Basisteils (34) des Querelements (32), das den Träger (31) an dem Ort der Vertiefung (33) stützt, in der Querrichtung des Antriebsriemens (3) gewölbt sind, wobei die Lageroberfläche (42) stärker als der Träger (31) gewölbt ist, und wobei in dem Antriebsriemen (3) eine untere Fläche des Kopfteils (36) des Querelements (32), wobei die untere Fläche relativ zur Lagerfläche (42) auf der gegenüberliegenden Seite der Vertiefung (33) positioniert ist, in Querrichtung konkav gewölbt ist, **dadurch gekennzeichnet, dass** ein Radius von konkaver Wölbung der unteren Fläche des Kopfteils (36) kleiner als ein Radius von konvexer Wölbung der Lagerfläche (42) des Basisteils (34) ist, wobei das Kopfteil (36) der Querelemente (32) nicht in Kontakt mit dem Träger (31) in der Mitte davon ankommt, sondern nur über zwei Drittel einer Gesamtbreite des endlosen Trägers (31) hinaus, betrachtet in der Richtung weg von dem Halsteil (35) des Querelements (32), mindestens an einer radial nach innen gerichteten Übersetzung oder an einer Drehung um die virtuelle Achse in der Längs- und/oder der Querachse des Antriebsriemens (3) des Querelements (32) relativ zu dem Träger (31).

2. Antriebsriemen (3) nach Anspruch 1, **dadurch gekennzeichnet, dass** der Kontakt, wie darin definiert, an oder nach drei Vierteln einer Gesamtbreite des Trägers (31) auftritt, betrachtet in der Richtung weg von dem Halsteil (35) des Querelements (32).

3. Antriebsriemen (3) nach Anspruch 1 oder 2, **dadurch gekennzeichnet, dass** die untere Fläche des Kopfteils (36) des Querelements (32) eine virtuelle Linie (42a), die entsprechend der konvexen Kontur der Lagerfläche (42) geformt ist, berührt, aber nicht schneidet, und die virtuelle Linie (42a) nur einmal berührt.

## Revendications

1. Courroie d'entraînement (3) munie d'un support sans fin (31) et d'un certain nombre d'éléments transversaux (32) qui sont disposés de manière coulissante sur le support (31), ledit support (31) comprenant au moins une bande métallique essentiellement en forme de ruban et lesdits éléments transversaux (32) étant chacun munis de deux faces principales (38, 39), entre lesquelles l'élément transversal (32) s'étend dans la direction de l'épaisseur avec au moins un évidement (33), dans lequel le support (31) est situé, avec une première partie ou partie base (34) qui est située sous l'évidement (33), une deuxième partie ou partie col (35) à la hauteur de l'évidement (33) et avec une troisième partie ou partie tête (36) située au-dessus de l'évidement (33), dans ladite courroie d'entraînement (3) à la fois le support sans fin (31) et une surface d'appui (42) de la partie base (34) de l'élément transversal (32) qui supporte le support (31) à l'emplacement de l'évidement (33) étant courbés dans la direction transversale de la courroie d'entraînement (3), la surface d'appui (42) étant courbée davantage que le support (31), et dans ladite courroie d'entraînement (3), une surface inférieure de la partie tête (36) de l'élément transversal (32), ladite surface inférieure étant située sur le côté opposé de l'évidement (33) par rapport à la surface d'appui (42), étant courbée de façon concave dans la direction transversale, **caractérisée en ce que**, un rayon de courbure concave de la surface inférieure de la partie tête (36) est inférieur à un rayon de courbure convexe de la surface d'appui (42) de la partie base (34), moyennant quoi la partie tête (36) des éléments transversaux (32) n'arrive pas en contact avec le support (31) en son milieu, mais seulement au-delà des deux tiers d'une largeur totale du support sans fin (31) vue dans la direction opposée à la partie col (35) de l'élément transversal (32), au moins à une translation vers l'intérieur radiale ou à une rotation autour de l'axe virtuel dans l'axe de longueur et/ou transversal de la courroie d'entraînement (3) de l'élément transversal (32) par rapport au support (31).

2. Courroie d'entraînement (3) selon la revendication 1, **caractérisée en ce que** le contact tel que défini en son sein se produit au niveau ou au-delà des trois quarts d'une largeur totale du support (31), vu dans la direction opposée à la partie col (35) de l'élément transversal (32).

3. Courroie d'entraînement (3) selon la revendication 1 ou 2, **caractérisée en ce que** la surface inférieure de la partie tête (36) de l'élément transversal (32) touche mais ne coupe pas une ligne virtuelle (42a) qui a une forme correspondant au contour convexe de la surface d'appui (42) et ne touche ladite ligne virtuelle (42a) qu'une fois.
